# EUROPEAN PATENT APPLICATION

(11) **EP 4 530 443 A1**
(43) Date of publication of application: **02.04.2025**
(21) Application number: 24201704.4
(22) Date of filing: 20.09.2024
(51) Int. Cl.: F01D 25/18, F02C 7/06, F02C 7/36, F02K 3/06, F16H 57/04, F01D 25/20

(54) **PLANETARY FAN DRIVE GEAR SYSTEM AUXILIARY OIL CAPTURE SYSTEM**

(30) Priority: 20.09.2023 US 202318370497
(71) Applicant: RTX Corporation, Farmington, CT 06032 (US)
(72) Inventor: MULDOON, Marc J., Farmington, 06032 (US); McCUNE, Michael E., Farmington, 06032 (US)
(74) Representative: Dehns

(57) **Abstract**

A turbine engine assembly includes an auxiliary reservoir (100,102) that is disposed radially outward of a rotating carrier (82) and an oil director (92,94) that is attached to the carrier (82). The oil director (92,94) imparts a rotational flow direction into expelled oil to drive the expelled oil tangentially against an oil receiving surface (96,98) and into the auxiliary reservoir (100,102).

## Description

### TECHNICAL FIELD

The present disclosure (invention) relates generally to an aircraft propulsion system that includes a fan drive gear system with a rotating carrier.

### BACKGROUND

A turbine engine typically includes a fan section, a compressor section, a combustor section and a turbine section. A speed reduction device such as an epicyclical gear assembly may be utilized to drive the fan section such that the fan section may rotate at a speed different than the turbine section so as to increase the overall propulsive efficiency of the engine. A carrier may suppPort a plurality of planetary gears and rotate about an engine axis. Rotation of the carrier can present challenges for recovering lubricant expelled from the gear system during operation. Turbine engine manufacturers continue to seek further improvements to engine performance including improvements to thermal, transfer and propulsive efficiencies.

### SUMMARY

A turbine engine assembly according to an aspect of the present invention includes, among other possible things, a fan drive gear system including a sun gear that is configured to be driven by an engine shaft that is rotatable about an axis, a plurality of intermediate gears that are intermeshed with the sun gear, a ring gear assembly that is engaged with the plurality of intermediate gears, the ring gear is configured for attachment to a static structure, a carrier that supports rotation of the plurality of intermediate gears, the carrier is configured for rotation about the axis. The turbine engine assembly also includes at least one auxiliary reservoir that is disposed radially outward of the carrier, an oil receiving surface that is configured to receive expelled oil and communicate the oil into the at least one auxiliary reservoir, an oil director that is attached to the carrier for imparting a rotational flow direction into the expelled oil to drive the expelled oil tangentially against the oil receiving surface, and a fan shaft that is coupled to the carrier.

Optionally, and in accordance with the above, the fan drive gear system further includes a static baffle for directing oil that is expelled from the gear system or carrier toward the at least one auxiliary reservoir.

In a further embodiment of any of the foregoing fan drive gear systems, the oil director includes a plurality of vanes for imparting a rotational flow into the expelled oil flow from the carrier.

Optionally, and in accordance with any of the above, the oil receiving surface includes a plurality of scoops for capturing oil flow.

Optionally, and in accordance with any of the above, the fan drive gear system includes a plurality of drain holes that are disposed through the ring gear for communicating oil to the at least one auxiliary reservoir.

Optionally, and in accordance with any of the above, the at least one auxiliary reservoir includes a forward auxiliary reservoir and an aft auxiliary reservoir.

The aft direction may be the defined by the side of the fan drive gear system on which the engine shaft drives the sun gear. An opposite, forward direction may be defined by the side of the fan drive gear system on which the fan shaft is coupled to the carrier.

Optionally, and in accordance with any of the above, the fan drive gear system includes a forward static baffle that directs expelled oil toward the forward auxiliary reservoir.

Optionally, and in accordance with any of the above, the oil director includes a forward oil director that is attached to a forward portion of the carrier and an aft oil director that is attached to an aft portion of the carrier.

Optionally, and in accordance with any of the above, the oil receiving surface includes a forward oil receiving surface that at least partially circumscribes the forward oil director and an aft oil receiving surface at least partially circumscribing the aft oil director.

A turbine engine assembly according to another aspect of the present invention includes, among other possible things, a static engine structure, a fan section that includes a fan shaft that is coupled to a hub that supports a plurality of blades that are rotatable about an axis, a fan drive gear system that includes a sun gear that is configured to be driven by an engine shaft that is rotatable about an axis, a plurality of intermediate gears that are intermeshed with the sun gear, a ring gear assembly that is engaged with the plurality of intermediate gears, the ring gear is configured for attachment to a static structure, a carrier that supports rotation of the plurality of intermediate gears, the carrier is configured for rotation about the axis. At least one auxiliary reservoir is disposed radially outward of the oil director. An oil receiving surface is configured to receive expelled oil and communicate the expelled oil into the at least one auxiliary reservoir. An oil director is attached to the carrier for imparting a rotational flow direction into the expelled oil to drive the expelled oil tangentially against the oil receiving surface. A fan shaft is coupled to the carrier. A primary lubricant system communicates lubricant to the fan drive gear system, and an auxiliary lubricant system includes an auxiliary reservoir that is configured to receive lubricant that is expelled from the fan drive gear system.

Optionally, and in accordance with any of the above, the turbine engine assembly further includes a static baffle for directing oil that is expelled from the gear system toward the at least one auxiliary reservoir.

Optionally, and in accordance with any of the above, the oil director includes a plurality of vanes for imparting a rotational flow into the expelled oil from the carrier.

Optionally, and in accordance with any of the above, the oil receiving surface includes a plurality of scoops for capturing oil flow that is expelled from the oil director.

Optionally, and in accordance with any of the above, the turbine engine assembly includes a plurality of drain holes that are disposed through the ring gear for communicating oil to the at least one auxiliary reservoir.

Optionally, and in accordance with any of the above, the at least one auxiliary reservoir includes a forward auxiliary reservoir and an aft auxiliary reservoir and the oil director includes a forward oil director that is attached to a forward portion of the carrier and an aft oil director that is attached to an aft portion of the carrier.

The aft direction may be the defined by the side of the fan drive gear system on which the engine shaft drives the sun gear. An opposite, forward direction may be defined by the side of the fan drive gear system on which the fan shaft is coupled to the carrier.

Optionally, and in accordance with any of the above, the turbine engine assembly includes a forward static baffle that directs expelled oil toward the forward auxiliary reservoir.

Optionally, and in accordance with any of the above, the oil receiving surface includes a forward oil receiving surface that circumscribes the forward oil director and an aft oil receiving surface that circumscribes the aft oil director.

A lubrication system for a gas turbine engine according to another aspect of the present invention includes, among other possible things, an oil director that is attached to a rotating carrier of a fan drive gear system for imparting a rotational flow into oil that is expelled from the rotating carrier. At least one auxiliary reservoir is disposed radially outward of the oil director. An oil receiving surface is configured to receive expelled oil from the oil director and communicate the oil into the at least one auxiliary reservoir. A primary lubricant system communicates lubricant to the fan drive gear system. An auxiliary lubricant system includes at least one auxiliary reservoir that is configured to communicate recovered oil to at least one of the fan drive gear system and the primary lubrication system.

The forward and aft directions may be the defined by the intended direction of travel of the gas turbine engine.

The aft direction may be the defined by the side of the fan drive gear system on which an engine shaft drives the gear system. An opposite, forward direction may be defined by the side of the fan drive gear system on which a fan shaft is coupled to the carrier.

Optionally, and in accordance with any of the above, the oil director includes a plurality of vanes for imparting the rotational flow into the expelled oil to direct the expelled oil flow tangentially against the oil receiving surface.

Optionally, and in accordance with any of the above, the oil receiving surface includes a plurality of scoops for capturing oil flow that is expelled from the oil director.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine including a planetary fan drive gear system.
Figure 2 is a schematic view of an example fan drive gear system.
Figure 3 is a schematic view of an example oil director and receiving surface.

### DETAILED DESCRIPTION

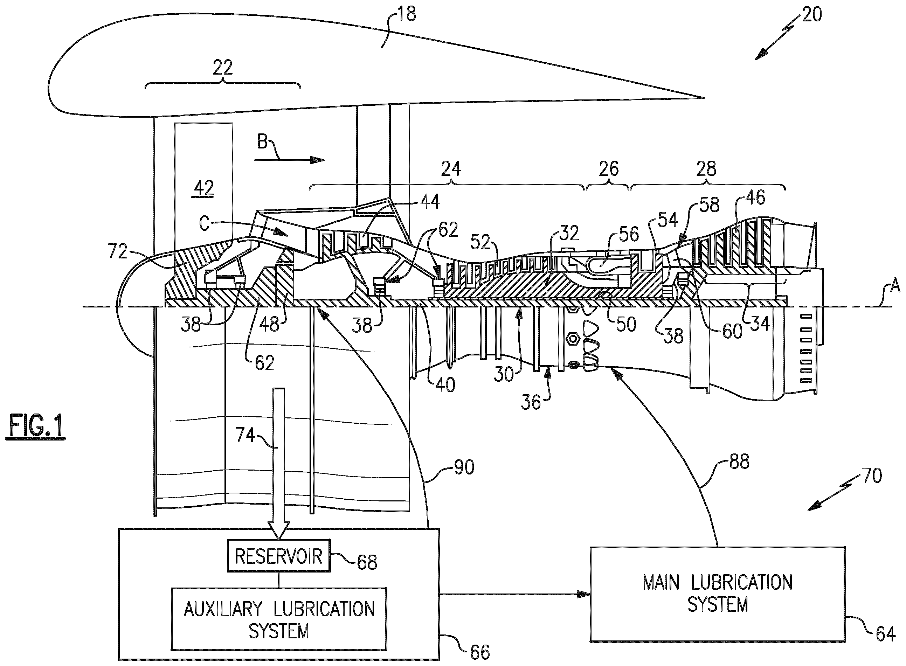

Figure 1 schematically illustrates a gas turbine engine 20 with an epicyclic fan drive gear system 48 having a rotating carrier. The rotating carrier includes features for directing oil tangentially to generate rotating and swirling flow to drive the expelled oil into static gutters and an auxiliary reservoir.

The gas turbine engine 20 is disclosed by way of example as a two-spool turbofan that generally incorporates a fan section 22, a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures, turbofans, turboprop, open rotor configurations and any other gas turbine engine architecture.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to a fan section 22 through a speed change mechanism, which in exemplary gas turbine engine 20 is illustrated as the fan drive gear system 48 to drive the fan section 22 at a lower speed than the low speed spool 30. The high speed spool 32 includes an outer shaft 50 that interconnects a second (or high) pressure compressor 52 and a second (or high) pressure turbine 54. The low pressure turbine 46 includes a plurality of turbine rotors 34. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, the fan drive gear system 48 may be located aft of the low pressure compressor 44, or aft of the combustor section 26 or even aft of turbine section 28, and fan section 22 may be positioned forward or aft of the fan drive gear system 48.

The engine 20 in one example is a high-bypass geared aircraft engine. the example engine 20 includes a bypass ratio greater than 20, with an example embodiment being greater than 32 and less than 72. Moreover, although the example turbine engine 20 is shown with the fan section 22 disposed within the nacelle 18, a turboprop engine is also within contemplation and scope of this disclosure.

The fan drive gear system 48 is an epicycle gear train with a gear reduction ratio of greater than about 5:1 and less than about 18:1. In another example embodiment, the fan drive gear system 48 provides a gear reduction ratio of between 8:1 and 13.5:1. The gear system 48 is coupled to the fan shaft 62 that is coupled to a hub 72 supporting a plurality of fan blades 42. The gear system 48 drives the fan blades 42 about the engine axis A. It should be understood, however, that the above parameters are only exemplary of one embodiment of a geared engine architecture and that the present disclosure is applicable to other gas turbine engine architectures including turbofan, turboshaft and open rotor engines.

The example engine 20 includes a lubrication system 70 with a main lubrication system 64 and an auxiliary lubrication system 66. The main lubrication system 64 provides a main lubricant flow 88 for the gear system 48 and other engine features such as the bearing assemblies 38. The auxiliary lubrication system 66 includes a reservoir 68 that receives lubricant 74 expelled from the fan drive gear system 48. Lubricant 90 from the auxiliary lubrication system 66 may be fed back to the main lubrication system and/or fed back to the gear system 48.

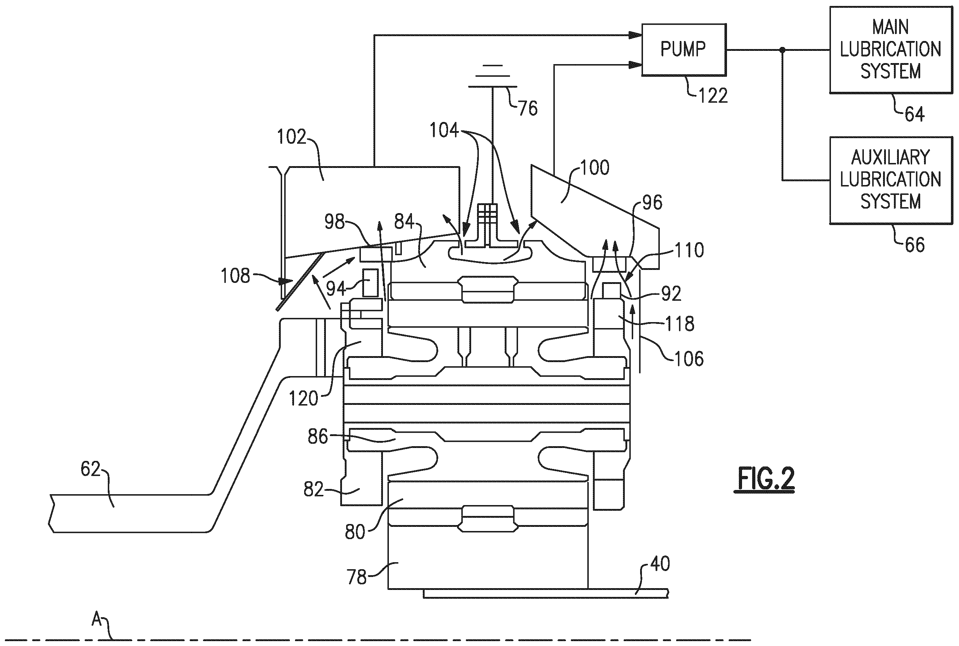

Referring to Figure 2 with continued reference to Figure 1, the example fan drive gear system 48 is an epicyclic gear system with a sun gear 78 coupled to a portion of the low shaft 40 and engaged to a plurality of intermediate gears 80 supported on a corresponding journal bearing 86 within a rotating carrier 82. A ring gear 84 circumscribes the intermediate gears 80 and is fixed to a static engine structure 76.

The fan shaft 62 is coupled to the carrier 82 and extends radially inward and forward of the gear system 48 to the fan hub 72. Oil expelled from the gear system 48 is directed toward one of an aft oil director 92 and a forward oil director 94 attached to the rotating carrier 82. The aft and forward oil directors 92, 94 direct oil radially and tangentially to drive the expelled oil toward and into the auxiliary reservoir 100. The example aft and forward oil directors 92, 94 are attached to a corresponding aft portion 118 and forward portion 120 of the carrier 82. An aft static gutter 106 directs expelled oil radially outward into the aft oil director 92. A forward static gutter 108 directs oil expelled forward of the carrier 82 toward the forward oil director 94. The aft and forward oil directors 92, 94 include features that impart rotation and swirl into the expelled oil flow.

Radially outward of the aft oil director 92 is an aft oil receiving surface 96. Radially outward of the forward oil director 94 is a forward receiving surface 98. The oil receiving surfaces 96, 98 have features for capturing the rotating and swirling oil flow and communicating that oil into a corresponding one of the forward reservoir 102 and the aft reservoir 100.

The aft oil director 92 and the forward oil director 94 change and direct the radially expelled oil flow into a rotating swirling oil flow. The rotating swirling oil flow proceeds along the corresponding oil receiving surfaces rather than simply impacting at a normal angle. Instead, the aft and forward oil directors 92, 94 change the radially directed flow into a rotating and swirling flow that follows the oil receiving surfaces to improve oil capture and direct the expelled oil into the corresponding auxiliary reservoirs 100, 102.

The fixed ring gear 84 includes radial passages 104 for communicating oil into one of the reservoirs 100, 102. Oil is communicated through the ring gear 84, through the passages 104 and into a corresponding one of the reservoirs 100, 102.

Oil within the reservoirs 100, 102 is communicated to at least one pump 122 and back to one or both the auxiliary lubrication system 66 and the main lubrication system 64.

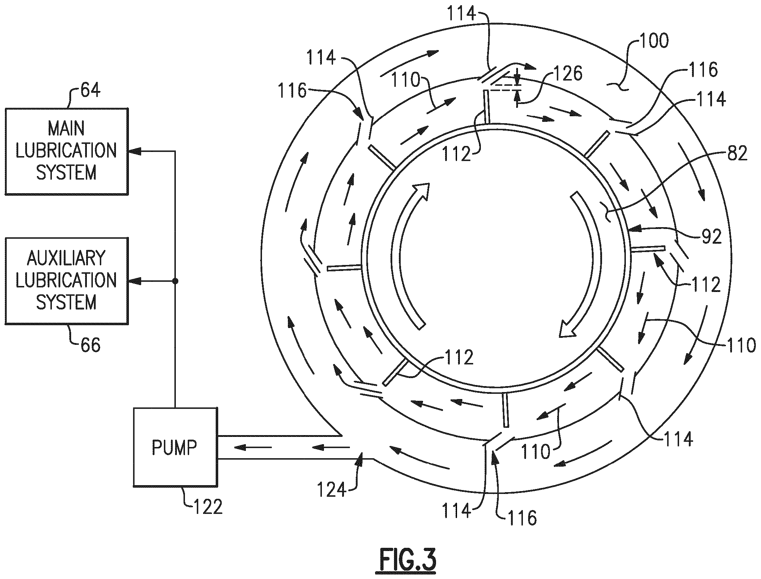

Referring to Figure 3, with continued reference to Figures 1 and 2, the aft oil director 92 is schematically shown includes vanes 112 that extend outward to impart a swirling, rotating direction into the expelled oil flow to generate an energized and directed oil flow indicated by arrows 110. The vanes 112 rotate with the carrier 82 and direct the oil flow rotationally against the oil receiving surface 96 corresponding with the aft reservoir 100. The forward oil director 94 shown in Figure 2 would includes similar features as those of the aft oil director 92 shown and disclosed by way of example in Figure 3.

The forward oil receiving surface 96 is shown by way of example and includes scoops 114 to guide the energized oil 110 radially through openings 116. The scoops 114 are arranged to correspond with the rotational direction of the flow generated by the aft oil director 92. The example scoops 114 are shown schematically and are sized and shaped to tailor oil flow through the openings 116 to application specific requirements and operation.

A spacing 126 between the vanes 112 and the scoops 114 is provided based on application specific requirements to maximize the capture of expelled oil within the auxiliary reservoir 100. The spacing 126 prevents the accumulation of expelled oil outside of the reservoir 100 by minimizing available space between the vanes 12 and 114. In one example embodiment, the spacing is greater than zero and less than about 0.5 inches (12.7 mm). In another example embodiment, the spacing is greater than zero and less than about 0.25 inches (6.35 mm). It should be appreciated, that the disclosed spacing is provided by way of example and would be subject to tolerances applicable to the assembly and manufacturing processes utilized. Moreover, other spacings that minimize accumulation of expelled oil may also be utilized and are within the scope and contemplation of this disclosure.

In one example operational embodiment, lubricant expelled from the gear system 48 is guided by one of the static gutters 106, 108 axially back toward the carrier 82. The static gutters 106, 108 further guide expelled oil toward a corresponding one of the aft and forward oil directors 92, 94. The aft and forward oil directors 92, 94 rotate with the carrier 82 and interact with the expelled oil flow to direct the flow radially and tangentially. The imparted rotational and tangential flow drives the oil against the oil receiving surfaces 96, 98. The rotational motion of the oil drives the oil against and into the scoops 114 that guide the oil through openings 116 that lead into one of the auxiliary reservoirs 100, 102.

The rotating, swirling flow of the expelled oil carries over into the auxiliary reservoir 100. The rotating, swirling flow within the auxiliary reservoir 100 propels the expelled oil through an outlet 124 to the pump 122. The pump 122 provides for communication of the oil to one or both the main and auxiliary lubrication systems 64, 66 for recirculation. The pump 122 and outlet 124 are shown schematically and would include conduits, valving or additional pumps required to direct oil to the applicable lubrication systems 64, 66. Moreover, the pump 122 may direct oil to other devices that utilize the expelled oil to support other engine component operation.

Accordingly, the example oil director provides for creating a rotating, swirling flow that directs oil for recapture in a reservoir associated with the fan drive gear system.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A turbine engine assembly comprising:
a fan drive gear system (48) comprising:
a sun gear (78) configured to be driven by an engine shaft (40) rotatable about an axis (A);
a plurality of intermediate gears (80) intermeshed with the sun gear (78);
a ring gear (84) engaged with the plurality of intermediate gears (80), the ring gear (84) configured for attachment to a static structure (76); and
a carrier (82) supporting rotation of the plurality of intermediate gears (80), the carrier (82) configured for rotation about the axis (A);
at least one auxiliary reservoir (68;100,102) disposed radially outward of the carrier (82);
an oil receiving surface (96,98) that is configured to receive oil and communicate the oil into the at least one auxiliary reservoir (68;100,102);
an oil director (92,94) attached to the carrier (82), and configured to impart a rotational flow direction into oil expelled from the carrier (82) to drive the expelled oil tangentially against the oil receiving surface (96,98); and
a fan shaft (62) coupled to the carrier (82).

2. The turbine engine assembly as recited in claim 1, further comprising a static baffle (106,108) for directing oil expelled from the carrier toward the at least one auxiliary reservoir (68;100,102).

3. The turbine engine assembly as recited in claim 1 or 2, wherein the oil director (92,94) comprises a plurality of vanes (112) for imparting a rotational flow into oil expelled flow from the carrier (82).

4. The turbine engine assembly as recited in claim 1, 2 or 3, wherein the oil receiving surface (96,98) comprises a plurality of scoops (114) for capturing oil flow expelled from the oil director (92,94).

5. The turbine engine assembly as recited in any preceding claim, including a plurality of drain holes (104) disposed through the ring gear (84) for communicating oil to the at least one auxiliary reservoir (68;100,102).

6. The turbine engine assembly as recited in any preceding claim, wherein the at least one auxiliary reservoir (68;100,102) comprises a forward auxiliary reservoir (102) and an aft auxiliary reservoir (100).

7. The turbine engine assembly as recited in claim 6, including a forward static baffle (108) directing expelled oil toward the forward auxiliary reservoir (102).

8. The turbine engine assembly as recited in any preceding claim, wherein the oil director (92,94) comprises a forward oil director (94) attached to a forward portion (120) of the carrier (82) and an aft oil director (92) attached to an aft portion (118) of the carrier (82).

9. The turbine engine assembly as recited in claim 8, wherein the oil receiving surface (96,98) comprises a forward oil receiving surface (98) at least partially circumscribing the forward oil director (94) and an aft oil receiving surface (96) at least partially circumscribing the aft oil director (92).

10. The turbine engine assembly as recited in claim 8, wherein the oil receiving surface (96,98) comprises a forward oil receiving surface (98) circumscribing the forward oil director (94) and an aft oil receiving surface (96) circumscribing the aft oil director (92).

11. The turbine engine assembly as recited in any preceding claim, further comprising:
a static structure (76);
a fan section including the fan shaft (62), the fan shaft (62) coupled to a hub (72) that supports a plurality of blades (42) that are rotatable about an axis (A);
a primary lubricant system (64) configured to communicate oil to the fan drive gear system (48); and
an auxiliary lubricant system (66) including the auxiliary reservoir (68;100;102).

12. A lubrication system for a gas turbine engine (20) comprising:
an oil director (92,94) configured to be attached to a rotating carrier (82) of a fan drive gear system (48), and configured to impart a rotational flow direction into oil expelled from the rotating carrier (82);
at least one auxiliary reservoir (68;100,102) disposed radially outward of the oil director (92,94);
an oil receiving surface (96,98) that is configured to receive expelled oil from the oil director (92,94) and communicate the oil into the at least one auxiliary reservoir (68;100,102);
a primary lubricant system (64) configured to communicate oil to the fan drive gear system (48); and
an auxiliary lubricant system (66) including the at least one auxiliary reservoir (68) and configured to communicate oil to the fan drive gear system (48) and/or the primary lubrication system (64).

13. The lubrication system as recited in claim 12, wherein the oil director (92,94) comprises a plurality of vanes (112) for imparting the rotational flow into the expelled oil to direct the expelled oil flow tangentially against the oil receiving surface (96,98).

14. The lubrication system as recited in claim 12 or 13, wherein the oil receiving surface (96,98) comprises a plurality of scoops (114) for capturing oil flow expelled from the oil director (92,94).
